# EUROPÄISCHE PATENTSCHRIFT

(11) **EP 3 861 590 B1**
(45) Veröffentlichungstag und Bekanntmachung des Hinweises auf die Patenterteilung: **27.03.2024**
(21) Anmeldenummer: 19779447.2
(22) Anmeldetag: 26.09.2019
(51) Int. Cl.: H01Q 1/32, H01Q 13/22, H01P 5/18

(54) **KOMMUNIKATIONSSYSTEM**
COMMUNICATIONS SYSTEM
SYSTÈME DE COMMUNICATION

(30) Priorität: 09.07.2019 DE 102019118533
(43) Veröffentlichungstag der Anmeldung: 11.08.2021
(73) Patentinhaber: Conductix-Wampfler GmbH, 79576 Weil am Rhein (DE)
(72) Erfinder: WINTER, Nicholas, 79540 Lörrach (DE)
(74) Vertreter: Charrier Rapp & Liebau
(86) Internationale Anmeldenummer: PCT/EP2019/075999
(87) Internationale Veröffentlichungsnummer: WO 2021/004645

(56) Entgegenhaltungen:
- DE-A1-102012 006 412
- SCHUCK W D ET AL: "The slotted-waveguide communication system of the maglev test range", PROCEEDINGS OF THE 13TH EUROPEAN MICROWAVE CONFERENCE,, 8. September 1983 (1983-09-08), Seiten 681-686, XP001687317,

## Beschreibung

Die Erfindung betrifft ein Kommunikationssystem nach dem Oberbegriff des Anspruchs 1.

Ein solches Kommunikationssystem ist beispielsweise aus der DE 10 2013 002 227 B4 bekannt. Es ermöglicht eine Kommunikation mit hoher Bandbreite und Störsicherheit zwischen einem entlang einer vorbestimmten Bewegungsbahn geführten Fahrzeug und einer ortsfesten Station. An einem Fahrzeug ist jeweils eine Antenne so angeordnet, dass sie durch einen Schlitz in den Hohlraum eines Hohlleiters hineinragt und elektromagnetische Wellen, die sich entlang des Hohlleiters ausbreiten, empfangen und/oder aussenden kann, während sich das Fahrzeug bewegt. An einem Ende des Hohlleiters ist eine entsprechende Antenne einer ortsfesten Station angeordnet.

Die Reichweite der Kommunikation wird bei einem solchen System durch die Dämpfung der elektromagnetischen Wellen bei ihrer Ausbreitung entlang des Schlitzhohlleiters begrenzt. Darüber hinaus muss ein Schlitzhohlleiter großer Länge aus mehreren Abschnitten zusammengefügt werden, woraus sich das Problem einer Verformung bei Temperaturänderungen infolge thermischer Längenänderung ergibt.

Aus der DE 10 2012 0064 412 A1 ist ein weiteres Kommunikationssystem der eingangs genannten Art bekannt, bei dem der Schlitzhohlleiter aus mindestens zwei durch jeweils eine Lücke voneinander getrennten Abschnitten besteht. Von einem Access Point aus ist ein hochfrequentes Signal zur Datenübertragung an Splitter übertragbar, durch welche es mehrfach aufgesplittet wird, so dass es den verschiedenen Abschnitten zuleitbar ist. Als Beispiel ist eine sechsfache Aufsplittung gezeigt. Vorzugsweise wird das aufgesplittete Signal in einer Schiene von einer stationär angeordneten, mittig im Schlitzhohlleiterbereich angeordneten Antennenvorrichtung in zwei entgegengesetzte Richtungen eingestrahlt. Somit sind viele Schienenabschnitte von nur einem einzigen Access Point, also auch von nur einem einzigen zugehörigen Funkmodem, mit dem hochfrequenten Signal zur Datenübertragung versorgbar. Hierdurch ist also von einem Access Point ein großer Bereich versorgbar, so dass häufige Funkzellenwechsel beim Bewegen der Fahrzeuge in der Schienenanlage vermeidbar sind und die Fehlerrate bei der Datenübertragung verringert wird.

Der Erfindung liegt die Aufgabe zugrunde, für ein gattungsgemäßes Kommunikationssystem eine zweckmäßige Lösung zur Realisierung einer großen Reichweite zu schaffen, die eine zuverlässige Kommunikation auch bei großer Länge der Bewegungsbahn des Fahrzeugs ermöglicht.

Diese Aufgabe wird erfindungsgemäß durch ein Kommunikationssystem mit den Merkmalen des Anspruchs 1 gelöst. Vorteilhafte Ausgestaltungen sind in den Unteransprüchen angegeben.

Erfindungsgemäß ist bei einem Kommunikationssystem zur Kommunikation zwischen einem entlang einer vorbestimmten Bewegungsbahn geführten Fahrzeug und einer ortsfesten Station unter Verwendung eines sich parallel zu der Bewegungsbahn des Fahrzeugs erstreckenden Schlitzhohlleiters, in den mindestens eine mit einer Sende- und Empfangseinrichtung des Fahrzeugs verbundene Antenne und mindestens eine mit einer Sende- und Empfangseinrichtung der ortsfesten Station verbundene Antenne hineinragen, wobei die Antenne des Fahrzeugs während der Bewegung des Fahrzeugs in Längsrichtung des Schlitzes bewegt wird und der Schlitzhohlleiter aus mindestens zwei durch eine Lücke voneinander getrennten Abschnitten besteht, für jeden Abschnitt des Schlitzhohlleiters mindestens eine in den jeweiligen Abschnitt hineinragende Antenne vorgesehen und zwei einander benachbarte und in verschiedene Abschnitte des Schlitzhohlleiters hineinragende Antennen sind über eine Koppeleinrichtung sowohl mit einer gemeinsamen Sende- und Empfangseinrichtung der ortsfesten Station, als auch miteinander gekoppelt.

Die Lücke zwischen den Abschnitten des Schlitzhohlleiters erlaubt eine thermische Längenänderung der einzelnen Abschnitte und durch die Anordnung von je einer Antenne in jedem Abschnitt kann die Sende- und Empfangseinrichtung mit Fahrzeugen im Bereich beider Abschnitte kommunizieren. Darüber hinaus überbrückt die Kopplung beider Abschnitte miteinander über die Koppeleinrichtung die Lücke zwischen den Abschnitten und ermöglicht eine Kommunikation über die Lücke hinweg von einem Abschnitt zum anderen. Dies ist insbesondere für die Störungsfreiheit der Kommunikation von Bedeutung, da die Sende- und Empfangseinrichtungen der Fahrzeuge in der Lage sein müssen, Sendesignale von Sende- und Empfangseinrichtungen anderer Fahrzeuge zu empfangen, um Kollisionen mit eigenen Sendesignalen zu erkennen oder von vornherein zu vermeiden.

Bei einer ersten zweckmäßigen Realisierung besteht die Koppeleinrichtung aus einem reziproken reaktiven 2-Wege-Leistungsteiler mit einem Eingangsanschluss und zwei Ausgangsanschlüssen, dessen Eingangsanschluss mit der Sende- und Empfangseinrichtung verbunden ist, und dessen Ausgangsanschlüsse jeweils mit einer der Antennen verbunden sind. Hierbei beziehen sich die Bezeichnungen Eingangsanschluss und Ausgangsanschlüsse auf diejenige Übertragungsrichtung, in der eine eingespeiste Leistung in zwei geringere Teilleistungen aufgeteilt wird, wobei das Übertragungsverhalten aber reziprok ist.

Alternativ weist die Koppeleinrichtung bei einer zweiten zweckmäßigen Realisierung zwei reziproke 2-Wege-Richtkoppler und einen reziproken 2-Wege-Leistungsteiler auf, wobei die Eingangsanschlüsse der Richtkoppler jeweils mit einer der Antennen verbunden sind, jeweils ein Ausgangsanschluss jedes Richtkopplers mit dem entsprechenden Ausgangsanschluss des anderen Richtkopplers verbunden ist, der andere Ausgangsanschluss jedes Richtkopplers jeweils mit einem der Ausgangsanschlüsse des Leistungsteilers verbunden ist und der Eingangsanschluss des Leistungsteilers mit der Sende- und Empfangseinrichtung verbunden ist. Auch hier beziehen sich die Bezeichnungen Eingangsanschluss und Ausgangsanschlüsse sowohl bei dem Leistungsteiler, als auch bei den Richtkopplern auf diejenige Übertragungsrichtung, in der eine eingespeiste Leistung in zwei geringere Teilleistungen aufgeteilt wird, wobei das Übertragungsverhalten aber ebenfalls reziprok ist.

Eine für die Verwendung bei der zweiten Ausführungsform besonders zweckmäßige Form eines Leistungsteilers ist ein Wilkinson-Teiler. Die zwei an jeweils einem Ausgangsanschluss miteinander verbundenen 2-Wege-Richtkoppler können zweckmäßigerweise auch zu einer Baueinheit mit vier externen Anschlüssen zusammengefasst sein.

Vorzugsweise ist der bei beiden Ausführungsformen der Koppeleinrichtung eingesetzte Leistungsteiler symmetrisch, d.h. eine am Eingang eingespeiste Leistung wird an den zwei Ausgängen in zwei gleich große Teilleistungen aufgeteilt, wobei diese aber aufgrund unvermeidlicher Verluste jeweils weniger als die Hälfte der eingespeisten Leistung betragen. Die Verwendung eines symmetrischen Leistungsteilers ist insbesondere dann vorteilhaft, wenn die Abschnitte des Schlitzhohlleiters, auf welche eine von der Sende- und Empfangseinrichtung abgegebene Leistung verteilt werden soll, gleich lang sind. In der umgekehrten Übertragungsrichtung ist bei Einspeisung eines Signals an einem der Ausgangsanschlüsse der am Eingangsanschluss verfügbare Anteil der eingespeisten Leistung unabhängig davon, an welchem Eingangsanschluss eingespeist wird, gleich groß.

Bei einer dritten zweckmäßigen Realisierung der Koppeleinrichtung besteht diese aus einem reziproken 2-Wege-Tapper mit einem Abzweiganschluss und zwei Durchgangsanschlüssen, dessen Abzweiganschluss mit der Sende- und Empfangseinrichtung verbunden ist, und dessen Durchgangsanschlüsse jeweils mit einer der Antennen verbunden sind. Der besondere Vorteil eines Tappers liegt in der geringen Einfügedämpfung zwischen den beiden Durchgangsanschlüssen, die für eine Kopplung der beiden Antennen in den verschiedenen Abschnitten des Schlitzhohlleiters mit geringer Dämpfung und somit für eine direkte Signalübertragung von einem Abschnitt zum anderen besonders vorteilhaft ist.

Vorzugsweise ist der Tapper bei der dritten Realisierung der Koppeleinrichtung symmetrisch, d.h. bei Einspeisung eines Signals am Abzweiganschluss wird an jeden der zwei Durchgangsanschlüsse ein gleich großer Teil der eingespeisten Leistung gekoppelt, wobei auch hier Verluste auftreten, so dass die an beiden Durchgangsanschlüssen verfügbare Leistung wesentlich geringer als die Hälfte der eingespeisten Leistung ist. Die Verwendung eines symmetrischen Tappers ist insbesondere dann vorteilhaft, wenn die Abschnitte des Schlitzhohlleiters, auf welche ein von der Sende- und Empfangseinrichtung abgegebenes Signal verteilt werden soll, gleich lang sind. In der umgekehrten Übertragungsrichtung ist bei Einspeisung eines Signals an einem der Durchgangsanschlüsse der am Abzweiganschluss verfügbare Anteil der eingespeisten Leistung unabhängig davon, an welchem Durchgangsanschluss eingespeist wird, gleich groß.

Die Erfindung ist nicht auf einen aus zwei Abschnitten bestehenden Schlitzhohlleiter beschränkt, sondern besonders nützlich, wenn der Schlitzhohlleiter eine Vielzahl von jeweils durch eine Lücke voneinander getrennten Abschnitten aufweist, und eine Vielzahl von Sendeund Empfangseinrichtungen vorgesehen sind, von denen jede über eine ihr zugeordnete Koppeleinrichtung mit zwei jeweils in verschiedene Abschnitte des Schlitzhohlleiters hineinragenden Antennen verbunden ist. Es können also erfindungsgemäß auch sehr lange Übertragungsstrecken für Transportsysteme mit sehr langen Bewegungsbahnen der Fahrzeuge realisiert werden.

Wenn der Schlitzhohlleiter aus einer Vielzahl von Abschnitten besteht und dementsprechend eine Vielzahl von verschiedenen Sende- und Empfangseinrichtungen der ortsfesten Station vorgesehen sind, können diese auch zumindest teilweise über verschiedene Kanäle mit der Sende- und Empfangseinrichtung des Fahrzeugs kommunizieren. Durch die direkte Verbindung der einzelnen Abschnitte über die Koppeleinrichtungen können nämlich Signale, welche zwischen einer ortsfesten Sende- und Empfangseinrichtung und einer Sende- und Empfangseinrichtung eines Fahrzeugs, welches sich im Bereich eines anderen Abschnitts des Schlitzhohlleiters befindet, in den keine Antenne der ortsfesten Sende- und Empfangseinrichtung hineinragt, auch über eine Lücke zwischen verschiedenen Abschnitten des Schlitzhohlleiters hinweg übertragen werden. Somit wird eine gleichzeitige Kommunikation in verschiedenen Kanälen über die Grenzen von Abschnitten des Schlitzhohlleiters hinweg ermöglicht.

Nachfolgend werden Ausführungsbeispiele der Erfindung anhand der Zeichnungen beschrieben. In diesen zeigt
- Fig. 1: eine schematische Querschnittsansicht eines Schlitzhohlleiters mit einer in ihn hineinragenden Antenne,
- Fig. 2: eine schematische Längsschnittansicht eines Schlitzhohlleiters nach Fig. 1 mit einem Blockschaltbild weiterer Komponenten des erfindungsgemäßen Kommunikationssystems
- Fig.3: das Schaltsymbol eines als Koppeleinrichtung geeigneten reaktiven 2-Wege-Leistungsteilers,
- Fig.4: das Blockschaltbild einer als Koppeleinrichtung geeigneten Kombination aus zwei Richtkopplern und einem 2-Wege-Leistungsteiler und
- Fig.5: das Schaltsymbol eines als Koppeleinrichtung geeigneten 2-Wege-Tappers.

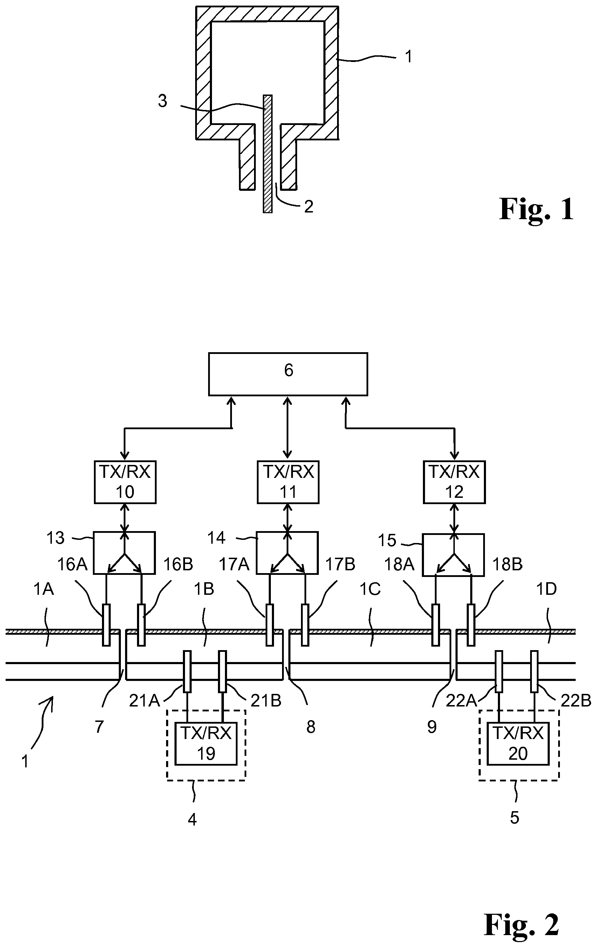

Fig. 1 zeigt eine schematische Querschnittsansicht eines Schlitzhohlleiters 1, wie er in einem Kommunikationssystem zur Kommunikation zwischen entlang einer vorbestimmten Bewegungsbahn geführten Fahrzeugen 4 und 5 (Fig. 2) und einer ortsfesten Station 6 und/oder zwischen mehreren solchen Fahrzeugen 4 und 5 untereinander im Stand der Technik verwendet wird. Durch den Schlitz 2 ragt eine Antenne 3 eines Fahrzeugs in den Schlitzhohlleiter 1 hinein, um elektromagnetische Wellen, die sich längs des Schlitzhohlleiters 1 ausbreiten, abzustrahlen und zu empfangen. Wenn sich ein Fahrzeug 4 oder 5 entlang seiner vorbestimmten Bewegungsbahn bewegt, dann bewegt sich die Antenne 3 zusammen mit diesem in Längsrichtung des Schlitzhohlleiters 1. Das Fahrzeug 4 oder 5 kann insbesondere durch Schienen entlang einer vorgesehenen Fahrstrecke geführt sein.

Wie Fig. 2 zeigt, besteht der Schlitzhohlleiter 1 aus mehreren separaten Abschnitten 1A, 1B, 1C und 1D, die jeweils durch eine Lücke 7, 8 oder 9 voneinander getrennt sind. Die Lücken 7 bis 9 sind nötig, weil der Schlitzhohlleiter 1 eine Länge hat, die nicht in einem einzigen Stück realisierbar ist und den Abschnitten 1A bis 1D bei einer Temperaturänderung jeweils eine Längenänderung ermöglicht werden muss. Wegen der großen Gesamtlänge des Schlitzhohlleiters 1 ist die ortsfeste Station 6 mit mehreren Sende- und Empfangseinrichtungen 10, 11 und 12, nachfolgend Transceiver genannt, verbunden, die entlang des Schlitzhohlleiters 1 verteilt angeordnet sind. Jeder Transceiver 10 bis 12 ist über eine Koppeleinrichtung 13 bzw. 14 bzw. 15 mit zwei Antennen 16A und 16B bzw. 17A und 17B bzw. 18A und 18B verbunden, von denen jeweils eine in einen von zwei einander benachbarten Abschnitten 1A und 1B bzw. 1B und 1C bzw. 1C und 1D des Schlitzhohlleiters 1 hineinragt. Von dem Transceiver 10 aus sind somit Signale über die Koppeleinrichtung 13 in die Abschnitte 1A und 1B einkoppelbar bzw. es sind Signale aus diesen Abschnitten 1A und 1B über die Koppeleinrichtung 13 zu dem Transceiver 10 auskoppelbar. Gleiches gilt sinngemäß für die Abschnitte 1B und 1C, den Transceiver 11 und die Koppeleinrichtung 14 sowie für die Abschnitte 1C und 1D, den Transceiver 12 und die Koppeleinrichtung 15.

Die Fahrzeuge 4 und 5 sind jeweils ebenfalls mit einer Sende- und Empfangseinrichtung 19 bzw. 20, nachfolgend Transceiver genannt, ausgestattet, die jeweils zwei Antennenanschlüsse hat und über diese mit zwei Antennen 21A und 21B bzw. 22A und 22B verbunden ist. Die Antennen 21A und 21B sowie die Antennen 22A und 22B haben jeweils einen Abstand voneinander in Längsrichtung des Schlitzhohlleiters 1, der größer ist als die Breite einer Lücke 7 bis 9, so dass in jeder möglichen Position eines Fahrzeugs 4 oder 5 stets eine seiner beiden Antennen 21A oder 21B bzw. 22A oder 22B in einen der Abschnitte 1A bis 1D des Schlitzhohlleiters 1 hineinragt und somit sende- und empfangsbereit ist.

Mittels der vorausgehend beschriebenen Konfiguration ist unabhängig von den momentanen Positionen der Fahrzeuge 4 und 5 zu jedem Zeitpunkt eine bidirektionale Kommunikation zwischen der ortsfesten Station 6 und dem Fahrzeug 4 über zumindest einen der drei Transceiver 10 bis 12, eine der Koppeleinrichtungen 13 bis 15 und eine der sechs ortsfesten Antennen 16A bis 18B sowie eine der fahrzeugseitigen Antennen 21A oder 21B und den Transceiver 19 möglich. Gleiches gilt sinngemäß für eine bidirektionale Kommunikation zwischen der ortsfesten Station 6 und dem Fahrzeug 5, auf dessen Seite dann eine der Antennen 22A oder 22B und der Transceiver 20 beteiligt sind. 2122

Die ortsfeste Koppeleinrichtung 13 verbindet erfindungsgemäß nicht nur den Transceiver 10 mit den diesem zugeordneten Antennen 16A und 16B, sondern auch die Antennen 16A und 16B, die in jeweils einen der einander benachbarten Abschnitte 1A und 1B des Schlitzhohlleiters 1 hineinragen, miteinander. Letzteres gilt sinngemäß auch für die Koppeleinrichtung 14 und die Abschnitte 1B und 1C sowie für die Koppeleinrichtung 15 und die Abschnitte 1C und 1D. Die Koppeleinrichtungen 13 bis 15 überbrücken also gleichzeitig auch die Lücken 7 bis 9 und ermöglichen eine durchgängige Signalübertragung entlang des Schlitzhohlleiters 1 über die Lücken 7 bis 9 zwischen dessen Abschnitten 1A bis 1D hinweg. Es versteht sich, dass die Koppeleinrichtungen 13 bis 15 zwischen den an ihnen angeschlossenen Antennen 16A und 16B bzw. 17A und 17B bzw. 18A und 18B jeweils eine gewisse Einfügedämpfung bewirken. Diese ist jedoch sehr gering im Vergleich zu der Dämpfung, welche die Lücken 7 bis 9 ohne die Koppeleinrichtungen 7 bis 9 zur Folge hätten.

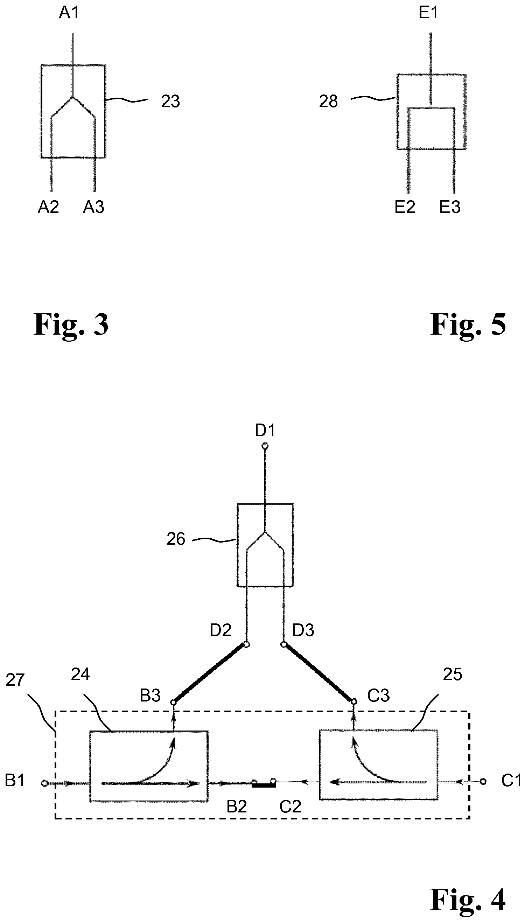

Eine mögliche Realisierung jeder der Koppeleinrichtungen 13 bis 15 ist ein reaktiver 2-Wege-Leistungsteiler 23, auch Splitter genannt, der als solcher zum Stand der Technik gehört. Das Schaltsymbol eines solchen reaktiven 2-Wege-Leistungsteilers 23 zeigt Fig. 3. Er verteilt eine an seinem Eingangsanschluss A1 eingespeiste Signalleistung gemäß einem vorbestimmten Teilverhältnis auf die Ausgangsanschlüsse A2 und A3, absorbiert jedoch einen Teil der eingespeisten Leistung. Bei einem symmetrischen Leistungsteiler ist besagtes Verhältnis 1:1. In der umgekehrten Betriebsrichtung wirkt er als Combiner und führt an den Anschlüssen A2 und A3 zugeführte Signalleistungen am Anschluss A1 zusammen.

Eine zweite mögliche Realisierung jeder der Koppeleinrichtungen 13 bis 15 ist die in Fig. 4 gezeigte Kombination aus zwei Richtkopplern 24 und 25, die als solche ebenfalls zum Stand der Technik gehören, mit einem 2-Wege-Leistungsteiler 26. Der Richtkoppler 24 verbindet einen Eingangsanschluss B1 direkt mit einen Ausgangsanschluss B2 und koppelt den Eingangsanschluss B1 mit geringer Dämpfung mit einem zweiten Ausgangsanschluss B3 , entkoppelt aber die Ausgangsabschlüsse B2 und B3 voneinander. Gleiches gilt bei dem zweiten Richtkoppler 25 für den Eingangsanschluss C1 und die Ausgangsanschlüsse C2 und C3. Zur erfindungsgemäßen Realisierung einer der Koppeleinrichtungen 13 bis 15 sind die Ausgangsanschlüsse B2 und C2 der beiden Richtkoppler miteinander verbunden und die anderen Ausgangsanschlüsse B3 und C3 sind jeweils mit einem Ausgangsanschluss D2 bzw. D3 des 2-Wege-Leistungsteilers 26 verbunden. Der Eingangsanschluss D1 des Leistungsteilers 26 wird erfindungsgemäß mit einem der Transceiver 13 bis 15 und die Eingangsanschlüsse B1 und C1 der Richtkoppler 24 und 25 jeweils mit einer der Antennen 16A und 16B bzw. 17A und 17B bzw. 18A und 18B verbunden.

Aufgrund der Reziprozität sowohl der Richtkoppler 24 und 25, als auch des Leistungsteilers 26 funktioniert die Zusammenschaltung von Fig. 4 grundsätzlich ebenfalls in beiden Übertragungsrichtungen, d.h. sowohl als Leistungsteiler, als auch als Combiner. Anstelle einer Zusammenschaltung von zwei separaten Richtkopplern 24 und 25 kann auch ein Richtkoppler 27 mit vier Anschlüssen B1, B3, C1 und C3 verwendet werden, der dieselbe Funktion bereitstellt und bereits in Form einer Baueinheit ausgeführt ist, was in Fig. 4 durch eine gestrichelte Umrandung gekennzeichnet ist. Der Leistungsteiler 26 soll bei dieser Variante seine zwei Ausgangsanschlüsse D2 und D3 nicht miteinander koppeln, da eine Kopplung zwischen den Eingangsanschlüssen B1 und C1 der Richtkoppler 24 und 25 bereits über deren direkt miteinander verbundene Ausgangsanschlüsse B2 und C2 hergestellt wird. Daher ist in dieser Variante als Leistungsteiler 26 anstelle eines reaktiven Leistungsteilers 23 ein Leistungsteiler, der seine zwei Ausgangsanschlüsse voneinander entkoppelt, wie insbesondere ein Wilkinson-Teiler, besser geeignet.

Eine dritte mögliche Realisierung jeder der Koppeleinrichtungen 13 bis 15 ist 2-Wege-Tapper 28, der als solcher ebenfalls zum Stand der Technik gehört. Das Schaltsymbol eines solchen 2-Wege-Tappers 28 zeigt Fig. 5. Er koppelt einen Teil einer an seinem Abzweiganschluss E1 eingespeisten Signalleistung in einem vorbestimmten Verhältnis an die Durchgangsanschlüsse E2 und E3. Bei einem symmetrischen Tapper ist dieses Verhältnis 1:1. In der umgekehrten Betriebsrichtung koppelt er jeweils einen Teil der an den Durchgangsanschlüssen E2 und E3 zugeführten Signalleistungen an den Anschluss E1. Während die Kopplung des Abzweiganschlusses E1 mit jedem der Durchgangsanschlüsse E2 und E3 mit einer erheblichen Dämpfung behaftet ist, werden die Durchgangsanschlüsse E2 und E3 mit einer vergleichsweise geringen Dämpfung miteinander gekoppelt.

Die Einfügedämpfungen der drei Varianten einer Koppeleinrichtung 13 bis 15 zwischen dem Transceiveranschluss und den Antennenanschlüssen einerseits und zwischen den Antennnenanschlüssen untereinander andererseits unterscheiden sich deutlich. In der Regel ist bei einem 2-Wege-Tapper 28 die Einfügedämpfung zwischen den Antennenanschlüssen E2 und E3 am geringsten, während bei einem reaktiven 2-Wege-Leistungsteiler 23 die Einfügedämpfung zwischen dem Transceiveranschluss A1 und den Antennenanschlüssen A2 und A3 am geringsten ist. Bei der Zusammenschaltung zweier Richtkoppler 24 und 25 mit einem 2-Wege-Leistungsteiler 26 ist die Einfügedämpfung zwischen den Antennenanschlüssen B1 und C1 in der Regel geringer als bei einem reaktiven 2-Wege-Leistungsteiler 23 allein, jedoch höher als bei einem 2-Wege-Tapper 28, und die Einfügedämpfung zwischen dem Transceiveranschluss D1 und den Antennenanschlüssen B1 und C1 ist höher als bei den anderen zwei Varianten.

Die Auswahl einer Variante ist unter Abwägung und Gewichtung verschiedener Anforderungen zu treffen. Wenn es auf eine möglichst geringe Einfügedämpfung zwischen benachbarten Abschnitten des Schlitzhohlleiters 1 ankommt, erscheint ein 2-Wege-Tapper als optimale und die Kombination zweier Richtkoppler mit einem Leistungsteiler als zweitbeste Lösung. Bei unterschiedlichen Längen der Abschnitte 1A bis 1D des Schlitzhohlleiters 1 könnten zwar auch unsymmetrische Leistungsteilungsverhältnisse der Koppeleinrichtungen 13 bis 15 zweckmäßig sein, doch ist es im Regelfall zweckmäßig, die Längen der Abschnitte 1A bis 1D alle gleich zu wählen und dementsprechend auch die Koppeleinrichtungen 13 bis 15 mit einer symmetrischen Leistungsteilung vorzusehen.

Ein Gesichtspunkt, unter dem eine geringe Einfügedämpfung zwischen den Antennenanschlüssen einer Koppeleinrichtung 13 bis 15 als besonders wichtig erscheint, ist die Kommunikation zwischen verschiedenen ortsfesten Transceivern und verschiedenen fahrzeugseitigen Transceivern über verschiedene Kanäle, wobei ein Kanal ein Frequenzband einer bestimmten Breite bezeichnet. So könnte es beispielsweise bei der Konfiguration von Fig. 2 gewünscht sein, dass der Transceiver 11 mit dem Transceiver 20 über einen ersten Kanal X und der Transceiver 12 mit dem Transceiver 19 über einen zweiten Kanal Y kommuniziert, wozu das Signal auf dem Kanal X über die Lücke 9 hinweg und das Signal auf dem Kanal Y über die Lücke 8 hinweg übertragen werden müssen, wofür eine geringe Einfügedämpfung der Koppeleinrichtungen 14 und 15 zwischen den Antennen 17A und 17B bzw. zwischen den Antennen 18A und 18B erwünscht ist.

## Patentansprüche

1. Kommunikationssystem zur Kommunikation zwischen mindestens einem entlang einer vorbestimmten Bewegungsbahn geführten Fahrzeug (4; 5) und einer ortsfesten Station (6), wobei das Kommunikationssystem einen Schlitzhohlleiter (1) umfasst, der sich parallel zu der Bewegungsbahn des Fahrzeugs (4, 5) erstreckt und, in den mindestens eine mit einer Sende- und Empfangseinrichtung (10; 11; 12) der ortsfesten Station (6) verbundene Antenne (16A, 16B; 17A, 17B; 18A, 18B) und mindestens eine Antenne (21A, 21B; 22A, 22B) des Fahrzeugs (4; 5) hineinragen, wobei die Antenne (21A, 21B; 22A, 22B) des Fahrzeugs (4; 5) bei einer Bewegung des Fahrzeugs (4; 5) in Längsrichtung des Schlitzhohlleiters (1) bewegt wird, **dadurch gekennzeichnet, dass** der Schlitzhohlleiter (1) aus mindestens zwei durch jeweils eine Lücke (7; 8; 9) voneinander getrennten Abschnitten (1A; 1B; 1C; 1D) besteht, dass für jeden Abschnitt (1A; 1B; 1C; 1D) des Schlitzhohlleiters (1) mindestens eine in den jeweiligen Abschnitt (1A; 1B; 1C; 1D) hineinragende Antenne (16A; 16B, 17A; 17B, 18A; 18B) vorgesehen ist, und dass zwei einander benachbarte und in verschiedene Abschnitte (1A; 1B; 1C; 1D) des Schlitzhohlleiters (1) hineinragende Antennen (16A, 16B; 17A, 17B; 18A, 18B) jeweils über eine Koppeleinrichtung (13; 14; 15) sowohl mit einer gemeinsamen Sende- und Empfangseinrichtung (10; 11; 12) der ortsfesten Station (6), als auch miteinander gekoppelt sind.

2. Kommunikationssystem nach Anspruch 1, **dadurch gekennzeichnet, dass** die Koppeleinrichtung (13; 14; 15) aus einem reziproken reaktiven 2-Wege-Leistungsteiler (23) mit einem Eingangsanschluss (A1) und zwei Ausgangsanschlüssen (A2, A3) besteht, wobei der Eingangsanschluss (A1) mit der Sende- und Empfangseinrichtung (10; 11; 12) verbunden ist, und die Ausgangsanschlüsse (A2, A3) jeweils mit einer der Antennen (16A, 16B; 17A, 17B, 18A, 18B) verbunden sind.

3. Kommunikationssystem nach Anspruch 1, **dadurch gekennzeichnet, dass** die Koppeleinrichtung (13; 14; 15) zwei reziproke 2-Wege-Richtkoppler (24; 25) und einen reziproken 2-Wege-Leistungsteiler (26) aufweist, wobei die Eingangsanschlüsse (B1; C1) der Richtkoppler (24; 25) jeweils mit einer der Antennen (16A, 16B; 17A, 17B; 18A, 18B) verbunden sind, jeweils ein Ausgangsanschluss (B2; C2) jedes Richtkopplers (24; 25) mit dem entsprechenden Ausgangsanschluss (C2; B2) des anderen Richtkopplers (25; 24) verbunden ist, der andere Ausgangsanschluss (B3; C3) jedes Richtkopplers (24; 25) jeweils mit einem der Ausgangsanschlüsse (D2, D3) des Leistungsteilers (26) verbunden ist und der Eingangsanschluss (D1) des Leistungsteilers (26) mit der Sende- und Empfangseinrichtung (10; 11; 12) verbunden ist.

4. Kommunikationssystem nach Anspruch 3, **dadurch gekennzeichnet, dass** der Leistungsteiler (26) ein Wilkinson-Teiler ist.

5. Kommunikationssystem nach Anspruch 3 oder 4, **dadurch gekennzeichnet, dass** die zwei an jeweils einem Ausgangsanschluss (B2; C2) miteinander verbundenen 2-Wege-Richtkoppler (24; 25) zu einer Baueinheit (26) mit vier externen Anschlüssen (B1, B3, C1, C3) zusammengefasst sind.

6. Kommunikationssystem nach einem der Ansprüche 2 bis 5, **dadurch gekennzeichnet, dass** der Leistungsteiler (23; 26) symmetrisch ist.

7. Kommunikationssystem nach Anspruch 1, **dadurch gekennzeichnet, dass** die Koppeleinrichtung (13; 14; 15) aus einem reziproken 2-Wege-Tapper (28) mit einem Abzweiganschluss (E1) und zwei Durchgangsanschlüssen (E2, E3) besteht, wobei der Abzweiganschluss (E1) mit der Sende- und Empfangseinrichtung (10; 11; 12) verbunden ist, und die Durchgangsanschlüsse (E2, E3) jeweils mit einer der Antennen (16A, 16B; 17A, 17B; 18A, 18B) verbunden sind.

8. Kommunikationssystem nach Anspruch 7, **dadurch gekennzeichnet, dass** der Tapper (28) symmetrisch ist.

9. Kommunikationssystem nach einem der Ansprüche 1 bis 8, **dadurch gekennzeichnet, dass** der Schlitzhohlleiter (1) eine Vielzahl von jeweils durch eine Lücke (7; 8; 9) voneinander getrennten Abschnitten (1A; 1B; 1C; 1D) aufweist, und dass eine Vielzahl von Sende- und Empfangseinrichtungen (10; 11; 12) der ortsfesten Station (6) vorgesehen sind, von denen jede über eine ihr zugeordnete Koppeleinrichtung (13; 14; 15) mit zwei jeweils in verschiedene Abschnitte (1A; 1B; 1C; 1D) des Schlitzhohlleiters (1) hineinragenden Antennen (16A, 16B; 17A, 17B; 18A, 18B) verbunden ist.

10. Kommunikationssystem nach Anspruch 9, **dadurch gekennzeichnet, dass** die verschiedenen Sende- und Empfangseinrichtungen (10; 11; 12) der ortsfesten Station (6) dafür eingerichtet sind zumindest teilweise über verschiedene Kanäle mit der Sende- und Empfangseinrichtung (19; 20) des Fahrzeugs (4; 5) zu kommunizieren.

## Claims

1. Communication system for communication between at least one vehicle (4; 5) guided along a predetermined movement path and a fixed station (6) comprising a slotted waveguide (1) that extends parallel to the movement path of the vehicle (4, 5) and into which project at least one antenna (16A, 16B; 17A, 17B; 18A, 18B) connected to a transmitting and receiving device (10; 11; 12) of the fixed station (6) and at least one antenna (21A, 21B; 22A, 22B) of the vehicle (4, 5), wherein the antenna (21A, 21B; 22A, 22B) of the vehicle (4, 5) is moved in the longitudinal direction of slotted waveguide (1) during movement of the vehicle (4; 5), **characterized in that** the slotted waveguide (1) consists of at least two sections (1A; 1B; 1C; 1D) separated from each other by a gap (7; 8; 9), **in that** at least one antenna (16A, 16B; 17A, 17B; 18A, 18B) projecting into the corresponding section (1A; 1B; 1C; 1D) is provided for each section (1A; 1B; 1C; 1D) of the slotted waveguide (1), and **in that** two adjacent antennas (16A, 16B; 17A, 17B; 18A, 18B) projecting into different sections (1A; 1B; 1C; 1D) of the slotted waveguide (1) are coupled via a coupling device (13; 14; 15) to a common transmitting and receiving device (10; 11; 12) of the fixed station (6) and also to each other.

2. Communication system according to claim 1, **characterized in that** the coupling device (13; 14; 15) consists of a reciprocal reactive 2-way power divider (23) with an input terminal (A1) and two output terminals (A2, A3), wherein the input terminal (A1) is connected to the transmitting and receiving device (10; 11; 12) and the output terminals (A2, A3) are each connected to one of the antennas (16A, 16B; 17A, 17B; 18A, 18B).

3. Communication system according to claim 1, **characterized in that** the coupling device (13; 14; 15) has two reciprocal 2-way directional couplers (24; 25) and a reciprocal 2-way power divider (26), wherein the input terminals (B1; C1) of the directional couplers (24; 25) are each connected to one of the antennas (16A, 16B; 17A, 17B; 18A, 18B), one output terminal (B2; C2) of each directional coupler (24; 25) is connected to the corresponding output terminal (C2; B2) of the other directional coupler (25; 24), the other output terminal (B3; C3) of each directional coupler (24; 25) is connected to one of the output terminals (D2, D3) of the power divider (26), and the input terminal (D1) of the power divider (26) is connected to the transmitting and receiving device (10; 11; 12).

4. Communication system according to claim 3, **characterized in that** the power divider (26) is a Wilkinson divider.

5. Communication system according to claim 3 or 4, **characterized in that** the two 2-way directional couplers (24; 25) connected to each other at one output terminal (B2; C2) are combined to form a structural unit (26) with four external terminals (B1, B3, C1, C3).

6. Communication system according to one of the claims 2 to 5, **characterized in that** the power divider (23; 26) is symmetrical.

7. Communication system according to claim 1, **characterized in that** the coupling device (13; 14; 15) consists of a reciprocal 2-way tapper (28) with a tap terminal (E1) and two through terminals (E2, E3), wherein the tap terminal (E1) is connected to the transmitting and receiving device (10; 11; 12) and the through terminals (E2, E3) are each connected to one of the antennas (16A, 16B; 17A, 17B; 18A, 18B).

8. Communication system according to claim 7, **characterized in that** the tapper (28) is symmetrical.

9. Communication system according to one of the claims 1 to 8, **characterized in that** the slotted waveguide (1) has a plurality of sections (1A; 1B; 1C; 1D) separated from each other by a gap (7; 8; 9), and **in that** a plurality of transmitting and receiving devices (10; 11; 12) of the fixed station (6) are provided, each of which is connected via its assigned coupling device (13; 14; 15) to two antennas (16A, 16B; 17A, 17B; 18A, 18B) projecting into different sections (1A; 1B; 1C; 1D) of slotted waveguide (1).

10. Communication system according to claim 9, **characterized in that** the different transmitting and receiving devices (10; 11; 12) of the fixed station (6) are equipped to communicate at least partially via different channels with the transmitting and receiving device (19; 20) of the vehicle (4; 5).

## Revendications

1. Système de communication pour la communication entre au moins un véhicule (4 ; 5) guidé le long d'une trajectoire de déplacement prédéfinie et une station fixe (6), dans lequel le système de communication comprend un guide d'onde à fente (1), qui s'étend parallèlement à la trajectoire de déplacement du véhicule (4, 5) et dans lequel font saillie au moins une antenne (16A, 16B ; 17A, 17B ; 18A, 18B) reliée à un dispositif d'émission et de réception (10 ; 11 ; 12) de la station fixe (6) et au moins une antenne (21A, 21B ; 22A, 22B) du véhicule (4 ; 5), dans lequel l'antenne (21A, 21B ; 22A, 22B) du véhicule (4 ; 5) lors d'un déplacement du véhicule (4 ; 5) est déplacée dans la direction longitudinale du guide d'onde à fente (1), **caractérisé en ce que** le guide d'onde à fente (1) est constitué d'au moins deux parties (1A ; 1B ; 1C ; 1D) séparées l'une de l'autre par respectivement un interstice (7 ; 8 ; 9), qu'au moins une antenne (16A ; 16B, 17A ; 17B, 18A ; 18B) faisant saillie dans la partie (1A ; 1B ; 1C ; 1D) respective est prévue pour chaque partie (1A ; 1B ; 1C ; 1D) du guide d'onde à fente (1), et que deux antennes (16A, 16B ; 17A, 17B ; 18A, 18B) voisines l'une de l'autre et faisant saillie dans différentes parties (1A ; 1B ; 1C ; 1D) du guide d'onde à fente (1) sont couplées respectivement par l'intermédiaire d'un dispositif de couplage (13 ; 14 ; 15) aussi bien à un dispositif d'émission et de réception (10 ; 11 ; 12) commun de la station fixe (6) que l'une à l'autre.

2. Système de communication selon la revendication 1, **caractérisé en ce que** le dispositif de couplage (13 ; 14 ; 15) est constitué d'un diviseur de puissance à 2 voies (23) réactif réciproque avec une borne d'entrée (A1) et deux bornes de sortie (A2, A3), dans lequel la borne d'entrée (A1) est reliée au dispositif d'émission et de réception (10 ; 11 ; 12), et les bornes de sortie (A2, A3) sont reliées respectivement à l'une des antennes (16A, 16B ; 17A, 17B ; 18A, 18B).

3. Système de communication selon la revendication 1, **caractérisé en ce que** le dispositif de couplage (13 ; 14 ; 15) présente deux coupleurs directionnels (24 ; 25) à 2 voies réciproques et un diviseur de puissance à 2 voies (26) réciproque, dans lequel les bornes d'entrée (B1 ; C1) des coupleurs directionnels (24 ; 25) sont reliées respectivement à l'une des antennes (16A, 16B ; 17A, 17B ; 18A, 18B), respectivement une borne de sortie (B2 ; C2) de chaque coupleur directionnel (24 ; 25) est reliée à la borne de sortie (C2 ; B2) correspondante de l'autre coupleur directionnel (25 ; 24), l'autre borne de sortie (B3 ; C3) de chaque coupleur directionnel (24 ; 25) est reliée respectivement à l'une des bornes de sortie (D2, D3) du diviseur de puissance (26) et la borne d'entrée (D1) du diviseur de puissance (26) est reliée au dispositif d'émission et de réception (10 ; 11 ; 12).

4. Système de communication selon la revendication 3, **caractérisé en ce que** le diviseur de puissance (26) est un diviseur de Wilkinson.

5. Système de communication selon la revendication 3 ou 4, **caractérisé en ce que** les deux coupleurs directionnels (24 ; 25) à 2 voies reliés l'un à l'autre au niveau de respectivement une borne de sortie (B2 ; C2) sont rassemblés en une unité modulaire (26) avec quatre bornes (B1, B3, C1, C3) externes.

6. Système de communication selon l'une quelconque des revendications 2 à 5, **caractérisé en ce que** le diviseur de puissance (23 ; 26) est symétrique.

7. Système de communication selon la revendication 1, **caractérisé en ce que** le dispositif de couplage (13 ; 14 ; 15) est constitué d'un répartiteur (28) à 2 voies réciproque avec une borne de dérivation (E1) et deux bornes de passage (E2, E3), dans lequel la borne de dérivation (E1) est reliée au dispositif d'émission et de réception (10 ; 11 ; 12), et les bornes de passage (E2, E3) sont reliées respectivement à l'une des antennes (16A, 16B ; 17A, 17B ; 18A, 18B).

8. Système de communication selon la revendication 7, **caractérisé en ce que** le répartiteur (28) est symétrique.

9. Système de communication selon l'une quelconque des revendications 1 à 8, **caractérisé en ce que** le guide d'onde à fente (1) présente une pluralité de parties (1A ; 1B ; 1C ; 1D) séparées les unes des autres respectivement par un interstice (7 ; 8 ; 9), et qu'une pluralité de dispositifs d'émission et de réception (10 ; 11 ; 12) de la station fixe (6) sont prévus, dont chacun est relié à deux antennes (16A, 16B ; 17A, 17B ; 18A, 18B) faisant saillie respectivement dans différentes parties (1A ; 1B ; 1C ; 1D) du guide d'onde à fente (1) par l'intermédiaire d'un dispositif de couplage (13 ; 14 ; 15) associé à celle-ci.

10. Système de communication selon la revendication 9, **caractérisé en ce que** les différents dispositifs d'émission et de réception (10 ; 11 ; 12) de la station fixe (6) sont conçus pour communiquer au moins en partie avec le dispositif d'émission et de réception (19 ; 20) du véhicule (4 ; 5) par l'intermédiaire de différents canaux.
